# EUROPÄISCHE PATENTANMELDUNG

(11) **EP 2 309 640 A2**
(43) Veröffentlichungstag der Anmeldung: **13.04.2011**
(21) Anmeldenummer: 10405186.7
(22) Anmeldetag: 05.10.2010
(51) Int. Cl.: H02P 7/28, E04F 10/06

(54) **Antriebsvorrichtung für einen Store mit Kleinspannungsmotor**

(30) Priorität: 09.10.2009 CH 15642009
(71) Anmelder: Griesser Holding AG, 8355 Aadorf (CH)
(72) Erfinder: Frei, Stefan, 8500 Frauenfeld (CH)
(74) Vertreter: Gachnang, Hans Rudolf

(57) **Zusammenfassung**

Die Antriebsvorrichtung umfasst ein Schaltnetzteil zum Bereitstellen der Betriebsspannung U_{B} für den Motor (1). Die Betriebsspannung U_{B} wird so geregelt, dass die Drehzahl des Motors (1) möglichst konstant bleibt. Als Messgrösse für die Regelung dient der Innenwiderstand R_{M} des Motors (1) bzw. eine davon abhängige Spannung.

## Beschreibung

Gegenstand der Erfindung ist eine Antriebsvorrichtung und ein Verfahren zum Antreiben einer Store mit einem Kleinspannungsmotor gemäss dem Oberbegriff der Patentansprüche 1 und 5.

Der Antrieb von Storen wie z.B. Rafflamellenstoren kann in bekannter Weise manuell mittels einer Handkurbel oder alternativ mittels Elektromotoren erfolgen. Insbesondere bei Storen, Jalousien oder Rollladen, die im Aussenbereich eingesetzt werden, umfassen die elektrischen Antriebe in der Regel Wechselstrommotoren, welche für den Betrieb mit 230VAC Niederspannung ausgebildet sind. Bei Steuerungen von Lamellenstoren wird in der Regel die Laufzeit erfasst, welche der Behang bis zum Erreichen der Schliessstellung benötigt. Diese Laufzeit ist bei Asynchronmotoren nur wenig lastabhängig. Sie kann z.B. zum Berechnen der Zeitspanne, die zum Anfahren einer vorgebbaren Absenkposition benötigt wird, benutzt werden. Nachdem ein Behang vollständig abgesenkt worden ist bzw. nach Ablauf der entsprechenden Laufzeit können die Lamellen in eine vorgebbare Schwenklage zurückgeschwenkt werden.

Anstelle von Motoren, die mit Netzwechselspannung betrieben werden, werden bei Storen zunehmend auch Kleinspannungsmotoren eingesetzt, insbesondere Gleichspannungs- bzw. DC-Motoren. In Verbindung mit solchen Kleinspannungsmotoren erweisen sich herkömmliche Zeitsteuerungen, wie sie bei Asynchronmotoren verwendet werden, als ungeeignet, da die Drehzahl solcher Motoren selbst bei konstanter Betriebsspannung stark lastabhängig ist. Der von der Endschiene des Behangs pro Zeiteinheit zurückgelegte Weg hängt somit wesentlich von der unterschiedlichen Belastung des Motors in der jeweiligen Öffnungsstellung ab. Die Lastverhältnisse können auch aufgrund anderer Faktoren wie Temperatur, Luftfeuchtigkeit, Reibungsverluste usw. ändern.

Eine Aufgabe der vorliegenden Erfindung ist es deshalb, eine einfache und kostengünstige Vorrichtung und ein Verfahren zum Regeln der Drehzahl von Kleinspannungsmotoren zu schaffen, die es ermöglichen, solche Motoren zusammen mit herkömmlichen Zeitsteuerungen zum Antreiben von Lamellenstoren zu verwenden.

Diese Aufgabe wird gelöst durch eine Antriebsvorrichtung und durch ein Verfahren zum Antreiben einer Store mit einem Kleinspannungsmotor gemäss den Merkmalen der Patentansprüche 1 und 5. Vorteilhafte Ausgestaltungen dieser Antriebsvorrichtung und des Verfahrens sind in den Unteransprüchen angegeben.

Die Speisung des Kleinspannungsmotors erfolgt über ein Schaltnetzteil, welches primärseitig mit der Netzspannung des Niederspannungs-Stromnetzes von z.B. 230 VAC verbunden ist.

Statt die sekundärseitig erzeugte, gleichgerichtete Spannung zu regeln, wie dies bei herkömmlichen Schaltnetzteilen üblich ist, wird die Drehzahl des angeschlossenen Motors über die Rückführung des Schaltnetzteils geregelt. Innerhalb vorgebbarer Grenzen führt das Schaltnetzteil die Sekundärspannung als Stellgrösse nach, sodass die Motordrehzahl unabhängig von der jeweiligen Last möglichst konstant bleibt. Dies kann grundsätzlich erreicht werden, indem dem Regler direkt die gewünschte Drehzahl als Führungsgrösse vorgegeben und mit der sensorisch erfassten Drehzahl verglichen wird.

Bei einer vorteilhaften Ausgestaltung der Erfindung wird anstelle der lastabhängigen tatsächlichen Motordrehzahl eine äquivalente oder zumindest in einem Teilbereich der Motordrehzahl näherungsweise äquivalente andere lastabhängige Messgrösse erfasst. Besonders vorteilhaft ist es, den durch die Last veränderbaren dynamischen Innenwiderstand des Motors bzw. eine mit diesem Innenwiderstand korrelierende Messgrösse zu erfassen. Dies kann auf einfache Art mit einer Wheatstone-Brücke geschehen, wobei die vom Schaltnetzteil erzeugte Betriebsspannung einem ersten Spannungsteiler mit Referenzwiderständen und einem zweiten Spannungsteiler aus dem zu messenden Motorwiderstand und einem seriell dazu geschalteten Shuntwiderstand zugeführt wird. Ein Komparator erzeugt aus der Brückenspannung ein Rückkopplungssignal, welches über einen Optokoppler der primärseitigen Schaltvorrichtung des Schaltnetzteils zugeführt wird. Diese Schaltvorrichtung ändert in Abhängigkeit des Rückkopplungssignals das Tastverhältnis bei der Ansteuerung des Transformators so, dass die Betriebsspannung nachgeführt wird, um unabhängig von der jeweiligen Last eine möglichst konstante Drehzahl des Motors sicherzustellen.

Vorzugsweise umfasst das Schaltnetzteil einen Überspannungsschutz, wobei die erzeugte Betriebsspannung überwacht wird. Übersteigt diese einen vorgegebenen Grenzwert, wird der primärseitigen Schaltvorrichtung z.B. über einen Optokoppler ein entsprechendes Steuersignal zugeführt. Die Schaltvorrichtung verhindert dann z.B. durch Begrenzung des Tastverhältnisses bei der Ansteuerung des Transformators, dass die Betriebsspannung weiter ansteigen kann.

Anhand einiger Figuren wird die Erfindung im Folgenden näher beschrieben. Dabei zeigen
- Figur 1: eine schematische Darstellung der Antriebsvorrichtung,
- Figur 2: eine schematische Darstellung der Messgrössenerfassung und der Rückführung für die Drehzahlregelung.

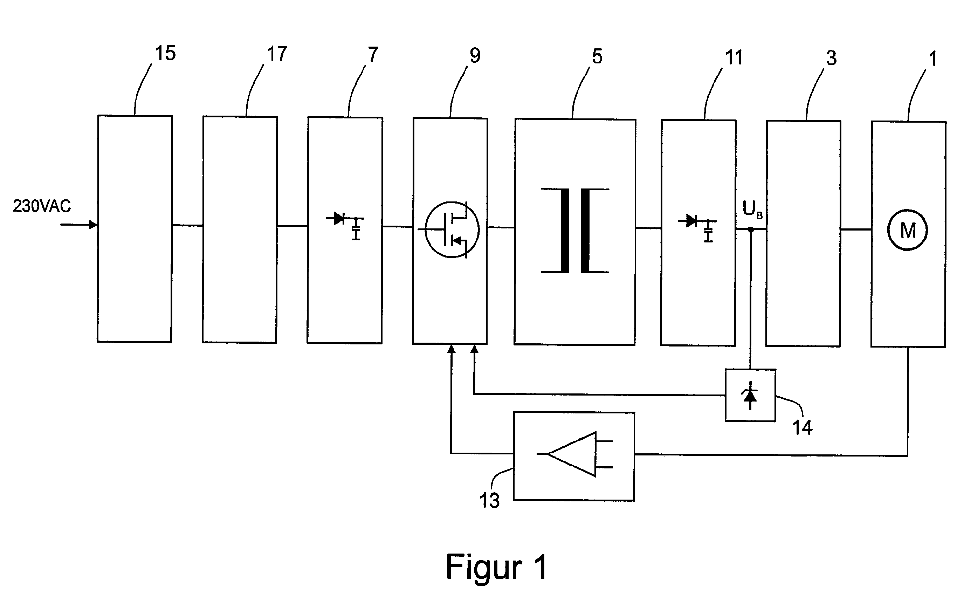

Figur 1 zeigt eine Antriebsvorrichtung für eine Store mit einem Kleinspannungselektromotor, fortan kurz Motor 1 genannt. Der Motor 1 ist ein Gleichspannungs- bzw. DC-Motor, insbesondere ein bürstenbehafteter Kleinspannungsmotor, dessen Drehsinn durch eine vorgeschaltete Richtungswahleinheit 3 vorgegeben bzw. geändert werden kann. Die Speisung des Motors 1 erfolgt über ein Schaltnetzteil, welches mit einer Netzwechselspannung von z.B. 230 VAC betrieben wird. Dieses Schaltnetzteil umfasst einen Transformator 5, einen primärseitigen bzw. dem Transformator 5 vorgelagerten Netzgleichrichter 7 und eine zwischen diesem Netzgleichrichter 7 und dem Transformator 5 angeordnete Schaltvorrichtung 9 zum Beeinflussen der Ansteuerung des Transformators 5 mit der vom Netzgleichrichter 7 bereitgestellten Gleichspannung. Die Schaltvorrichtung 9 ist dazu ausgebildet, bei der Ansteuerung des Transformators 5 eine Stellgrösse - insbesondere das Tastverhältnis - in Abhängigkeit einer Messgrösse zu ändern. Im Weiteren umfasst das Schaltnetzteil eine sekundärseitige bzw. dem Transformator 5 nachgelagerte Gleichrichtervorrichtung 11 zur Bereitstellung der Betriebsspannung U_{B} für den Motor 1 und eine Regelschaltung 13 zum Beeinflussen der primärseitigen Stellgrösse bzw. des Tastverhältnisses der Schaltvorrichtung 9. Der Rückkopplungszweig der Regelschaltung 13 umfasst eine galvanische Entkopplung, vorzugsweise in Form eines Optokopplers (nicht dargestellt). Im Unterschied zu herkömmlichen Schaltnetzteilen, bei denen üblicherweise die erzeugte Betriebsspannung U_{B} als Messgrösse erfasst und geregelt wird, ist bei der vorliegenden Erfindung eine Regelung der Motordrehzahl vorgesehen. Entsprechend wird die Motordrehzahl oder eine zumindest näherungsweise äquivalente Messgrösse erfasst und auf die Schaltvorrichtung 9 rückgekoppelt. Eine Schutzschaltung 14 begrenzt die Betriebsspannung U_{B} auf einen z.B. mittels einer Zenerdiode vorgebbaren Wert, indem sie - wiederum galvanisch entkoppelt - entsprechend auf die Schaltvorrichtung 9 einwirkt.

Die Antriebsvorrichtung kann zusätzlich weitere Elemente wie z.B. eine Endlagenabschaltung 15 und eine Drehrichtungsdetektion 17 umfassen, wobei letztere in Wirkverbindung mit der Richtungswahleinheit 3 steht.

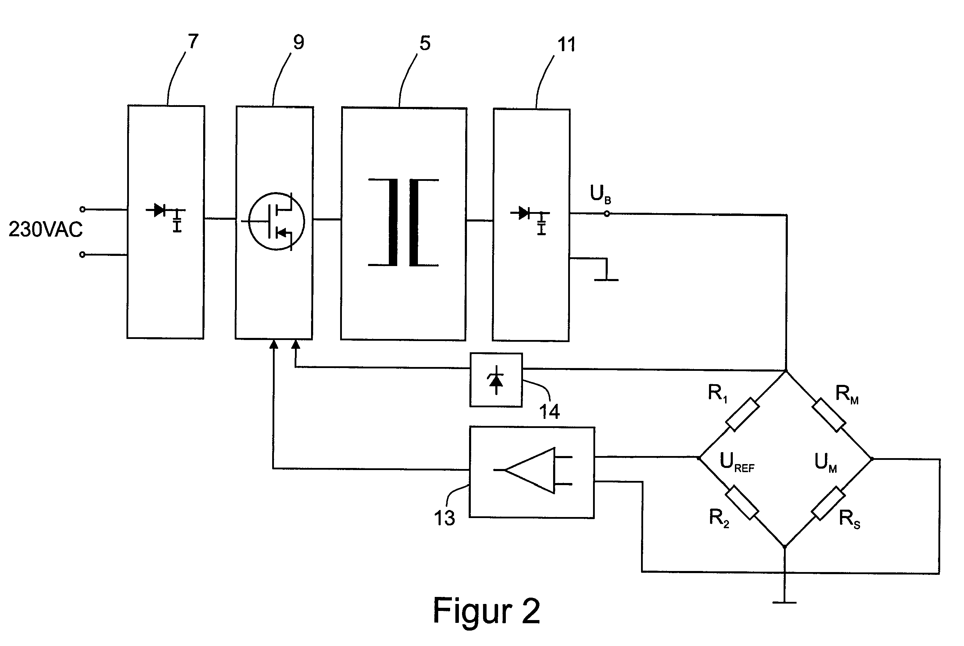

Figur 2 zeigt schematisch und stark vereinfacht eine besonders vorteilhafte Ausgestaltung der Antriebsvorrichtung, wobei der lastabhängige Innenwiderstand R_{M} des Motors 1 bzw. eine entsprechende Spannung erfasst wird. In Abhängigkeit von diesem Innenwiderstand R_{M} wird die Betriebsspannung U_{B} derart angepasst, dass die Drehzahl des Motors 1 zumindest annähernd konstant bleibt. Die Erfassung des Innenwiderstandes R_{M} des Motors 1 erfolgt mit einer Wheatstone-Brücke, wobei ein Shunt-Widerstand Rₛ und der Motor 1 einen ersten Spannungsteiler zwischen Masse und der Betriebsspannung U_{B} bilden, und zwei Referenzwiderstände R₁ und R₂ einen zweiten Spannungsteiler. Die resultierenden Werte der Referenzspannung U_{REF} und der Messspannung UM werden einem Komparator (nicht dargestellt) der Regelschaltung 13 zugeführt, weiter verarbeitet und z.B. über einen Optokoppler (nicht dargestellt) zur Schaltvorrichtung 9 rückgeführt. Die Schaltvorrichtung 9 führt das Tastverhältnis bei der Ansteuerung des Transformators 5 derart nach, dass die resultierende höhere oder tiefere Betriebsspannung U_{B} den Motor 1 mit näherungsweise konstanter Drehzahl zu drehen vermag.

## Patentansprüche

1. Antriebsvorrichtung für eine Store mit einem Kleinspannungsmotor (1) und einem Schaltnetzteil, wobei das Schaltnetzteil einen Transformator (5), einen primärseitigen Netzgleichrichter (7) und eine zwischen diesem Netzgleichrichter (7) und dem Transformator (5) angeordnete Schaltvorrichtung (9) umfasst, und wobei das Schaltnetzteil eine sekundärseitige Gleichrichtervorrichtung (11) zum Bereitstellen einer Betriebsspannung U_{B} für den Motor (1) und eine Regelschaltung (13) zum Beeinflussen dieser Betriebsspannung U_{B} mittels einer primärseitigen Stellgrösse der Schaltvorrichtung (9) umfasst, **dadurch gekennzeichnet, dass** die primärseitige Stellgrösse in Abhängigkeit einer sekundärseitigen Messgrösse veränderbar ist, und dass diese sekundärseitige Messgrösse in Abhängigkeit der Motordrehzahl veränderbar ist.

2. Antriebsvorrichtung nach Anspruch 1, wobei der Kleinspannungsmotor (1) einen lastabhängigen Innenwiderstand R_{M} aufweist, **dadurch gekennzeichnet, dass** der Kleinspannungsmotor (1), ein Shunt-Widerstand R_{S} sowie zwei Referenzwiderstände R₁, R₂ zu einer Wheatstone-Brücke zwischen der Betriebsspannung U_{B} und dem zugehörigen Masse-Bezugspotential verschaltet sind, und dass die sekundärseitige Messgrösse die Differenz der Spannungen U_{REF} und UM der beiden Spannungsteiler R_{M}/R_{S} und R₁/R₂ ist.

3. Antriebsvorrichtung nach Anspruch 2, **dadurch gekennzeichnet, dass** die Regelschaltung 13 einen Komparator zum Verarbeiten der sekundärseitigen Messgrösse und eine galvanische Trennvorrichtung zum Rückkoppeln eines aus der Messgrösse abgeleiteten Signals zur Schaltvorrichtung (9) umfasst.

4. Antriebsvorrichtung nach einem der Ansprüche 1 bis 3, **dadurch gekennzeichnet, dass** eine Schutzschaltung (14) zum Begrenzen der Betriebsspannung U_{B} vorgesehen ist, und dass diese Schutzschaltung (14) eine galvanisch getrennte Rückkopplung zur Schaltvorrichtung (9) umfasst.

5. Verfahren zum Antreiben einer Store mit einer Antriebsvorrichtung nach einem der Ansprüche 1 bis 4, **dadurch gekennzeichnet, dass** die Betriebsspannung U_{B} des Kleinspannungsmotors (1) so geregelt wird, dass eine Messgrösse, welche die Motordrehzahl repräsentiert, selbst bei ändernder Last möglichst konstant bleibt.

6. Verfahren nach Anspruch 5, **dadurch gekennzeichnet, dass** der lastabhängige Innenwiderstand R_{M} des Kleinspannungsmotors (1) oder eine von diesem Innenwiderstand R_{M} abhängige Spannung als Messgrösse erfasst werden.

7. Verfahren nach einem der Ansprüche 5 oder 6, **dadurch gekennzeichnet, dass** beim Steuern der Antriebsvorrichtung Funktionen verwendet werden, die auf einer Laufzeit oder Laufgeschwindigkeit der Store basieren.
